Europäisches Patentamt

European Patent Office

Office européen des brevets

(11) Veröffentlichungsnummer: **0 475 462 B1**

(12) **EUROPÄISCHE PATENTSCHRIFT**

(45) Veröffentlichungstag der Patentschrift: **10.05.95**

(51) Int. Cl.⁶: **D06F 35/00**, D06F 23/02

(21) Anmeldenummer: **91118837.3**

(22) Anmeldetag: **17.11.88**

(60) Veröffentlichungsnummer der früheren Anmeldung nach Art. 76 EPÜ: **0 318 761**

(54) **Verfahren zum Betreiben einer Trommelwaschmaschine und Trommelwaschmaschine zur Durchführung des Verfahrens.**

(30) Priorität: **04.12.87 DE 3741177**

(43) Veröffentlichungstag der Anmeldung:
**18.03.92 Patentblatt 92/12**

(45) Bekanntmachung des Hinweises auf die Patenterteilung:
**10.05.95 Patentblatt 95/19**

(84) Benannte Vertragsstaaten:
**DE ES FR IT**

(56) Entgegenhaltungen:
**EP-A- 0 245 721
DE-A- 1 610 132
FR-A- 1 299 679
FR-A- 2 548 699**

(73) Patentinhaber: **Bosch-Siemens Hausgeräte GmbH
Hochstrasse 17
D-81669 München (DE)**

(72) Erfinder: **Uszkureit, Detlef
Schottmüller Strasse 14
W-1000 Berlin 37 (DE)**

## Beschreibung

Die Erfindung betrifft ein Verfahren zum Betreiben einer Trommelwaschmaschine und eine Trommelwaschmaschine dafür mit einer horizontal drehbar gelagerten Wäschetrommel mit gelochtem Trommelmantel und mit darin angeordneten Mitnehmern, die zu ihrem Innenraum hin offene Schöpfvorrichtungen aufweisen, und mit einem automatisch gesteuerten Waschprogramm, das einen Benetzungsabschnitt mit einer Trommeldrehzahl von höchstens 30 min$^{-1}$, einen Klarwäscheabschnitt mit einer Trommeldrehzahl von höchstens 60 min$^{-1}$, einen Spülabschnitt und einen Schleuderabschnitt aufweist.

Eine solche Trommelwaschmaschine ist aus der DE-OS 37 12 118 bekannt. Sie wird in einer Benetzungsphase vorzugsweise mit einer Wäschetrommel-Drehzahl von 27 min$^{-1}$ kontinuierlich betrieben. Dadurch konnte gegenüber Trommelwaschmaschinen, deren Trommel auch während der Benetzungsphase mit der üblichen Waschdrehzahl von beispielsweise 55 min$^{-1}$ betrieben wird, die Benetzung der Wäsche so stark intensiviert werden, daß die Wäsche auch bei geringstmöglichem Wasserstand kurz oberhalb des unteren Scheitelpunktes der Wäschetrommel in verhältnismäßig kurzer Zeit homogen durchfeuchtet ist.

Offenbar scheinen Fachleute jedoch mit den Benetzungs- und Reinigungsergebnissen der Wäsche in Trommelwaschmaschinen nicht uneingeschränkt zufrieden zu sein, so daß am Markt befindliche Trommelwaschmaschinen bereits mit einer versteckt angeordneten Einrichtung zum Erhöhen des Wasserstandes versehen ist. Hierdurch wird jedoch der ursprünglich angestrebte Spareffekt in Bezug auf die eingesetzte Wasser- und Energiemenge wieder aufgegeben.

Der Erfindung liegt daher die Aufgabe zugrunde, eine Trommelwaschmaschine der bekannten Art derart zu betreiben, daß die Wäsche auch bei sehr geringem Wasserstand mit absoluter Sicherheit und in kürzester Zeit homogen benetzt und während des Klarwäscheabschnitts effektiver vom Schmutz befreit wird.

Die Aufgabe wird dadurch gelöst, daß die Trommel während des Benetzungsabschnitts mit höchstens 30 %, vorzugsweise 25 %, Einschaltdauer intervallartig und nur in Schöpfrichtung während des Klarwäscheabschnitts und während des Spülabschnitts abwechselnd in Schöpfdrehrichtung und in Entleerungsdrehrichtung sowie während des Schleuderabschnitts nur in Entleerungsdrehrichtung angetrieben wird. Überraschenderweise hat sich nämlich gezeigt, daß nicht allein der in der DE-OS 37 12 118 beschriebene Beregnungseffekt für die homogene Durchfeuchtung der Wäsche verantwortlich ist, sondern daß bei Ruhepausen der Wäsche zwischen den Trommel-Drehintervallen die auf die Wäsche geregnete Lauge während eines Sickervorganges die Wäsche noch intensiver benetzen kann. Außerdem wird während des Klarwäscheabschnitts der Schmutz-Ablöse-Effekt gesteigert, wie weiter unten noch erläutert wird.

Dabei kann es von Vorteil sein, daß die Trommel während des Benetzungsabschnitts abwechselnd in Schöpfdrehrichtung und in Entleerungsdrehrichtung angetrieben wird. Abgesehen von der möglichen Vereinfachung der Steuerung einer solchen Trommelwaschmaschine, die dieselbe Steuerungseinrichtung für die Trommeldrehung während des Benetzungsabschnitts wie während des Klarwäscheabschnitts verwenden kann, entsteht durch den Wechsel der Trommel-Drehrichtung ein Pumpeffekt der Lauge innerhalb des Laugenbehälters und der Wäschetrommel und eine solche Umschichtung der Wäsche, daß bei anschließendem Schöpf- und Beregnungsvorgang wieder trockene Wäscheteile sich dem Laugenregen aussetzen.

Eine Weiterbildung des erfindungsgemäßen Verfahrens bevorzugt die Einschaltdauer während eines Intervalls des Trommelantriebs mit etwa 4 s und die Stillstanddauer der Trommel mit etwa 12 s. 4 s Laufdauer der Trommel fördern genügend Lauge über die Wäsche, die während 12 s Trommel-Stillstand von der Lauge durchsickert wird.

Von besonderem Vorteil ist eine Weiterbildung des Verfahrens, bei der der Trommelantrieb während des Benetzungsabschnitts erstmals nach Erreichen eines Laugenniveaus eingeschaltet wird, bei dem die Schöpfvorrichtungen gerade in die Lauge eintauchen. Hierdurch kann verhindert werden, daß die noch nicht benetzte Wäsche zu lange trocken in der Wäsche umhergeschichtet wird und dabei einem erhöhten Abrieb unterliegt.

Vorteilhafterweise ist der Benetzungsabschnitt des erfindungsgemäßen Verfahrens maximal 3 min lang. Innerhalb dieser Zeit kann eine volle Wäschebeladung von beispielsweise 4,5 kg homogen durchfeuchtet werden.

In einem weiteren vorteilhaften, nebengeordneten Verfahren zum Betreiben einer Trommelwaschmaschine wird zwar gemäß der Erfindung die Trommel während des Benetzungsabschnitts ebenfalls mit höchstens 30 %, vorzugsweise 25 % Einschaltdauer intervallartig und nur in Schöpfdrehrichtung während des Klarwäscheabschnitts und während der Spülabschnitts abwechselnd in Schöpfdrehrichtung und in Entleerungsdrehrichtung sowie während des Schleuderabschnitts nur in Entleerungsdrehrichtung angetrieben, jedoch weist der Klarwäscheabschnitt wenigstens zwei Zyklen auf, die eine Waschschleuderphase, bei der die Wäschetrommel in Entleerungsdrehrichtung mit einer Drehzahl bis zu 300 min$^{-1}$ gedreht wird, und eine Reversierphase umfaßt, bei der die Wäschetrommel alternierend mit einer Waschdrehzahl von ungefähr 55 min$^{-1}$ gedreht wird, wobei die Schöpfdrehrichtung weniger lange eingehalten wird als die Entleerungsdrehrichtung. Zusätzlich zu den vorher schon beschriebenen Vorteilen kann bei einem derartig eingerichteten Klarwäscheabschnitt ein besonderer Wascheffekt dadurch erzielt werden, daß das Laugenniveau im Laugenbehälter außerhalb der Wäschetrommel während der Waschschleuderphase durch Austreiben der Lauge aus der Wäsche stark angehoben wird, während in der anschließenden Reversierphase fast die gesamte Laugenmenge wieder in die Wäschetrommel und in die Wäsche aufgenommen wird, so daß ein nahezu vollständiger Austausch der von der Wäsche gebundenen Waschlauge stattfindet. Dieser Austausch bewirkt außerdem, daß dispergierte und gebundene Schmutzteilchen intensiver aus der Wäsche ausgetrieben werden.

In einer bevorzugten Trommelwaschmaschine zur Durchführung des erfindungsgemäßen Verfahrens nach den Ansprüchen 1 bis 4 oder 5 können die Schöpfvorrichtungen aller Mitnehmer in eine gemeinsame Schöpfrichtung weisen. Dies vereinfacht den Aufbau der Wäschetrommel und ist dann besonders gut geeignet, wenn durch weniger aufwendige Steuerungsmittel alle gewünschten Benetzungs- und Waschwirkungsweisen erreicht werden könnnen.

In einer anderen bevorzugten Trommelwaschmaschine konnte es als vorteilhaft erkannt werden, daß jeder Mitnehmer mindestens zwei gegeneinander abgedichtete Kammern unterschiedlicher Volumina enthält und ihre zugeordneten Schöpfvorrichtungen in unterschiedliche Schöpfdrehrichtungen weisen. Hierdurch kann unter Anwendung von wenigen unterschiedlichen Drehrhythmen eine Vielzahl von Benetzungs- und Waschwirkungsweisen erzielt werden.

Die Waschschleuderphase einer Trommelwaschmaschine gemäß dem Verfahren nach Anspruch 5 dauert vorteilhafterweise etwa 10 s, während die Reversierphase etwa 80 s dauert. Außerdem kann die zuvor beschriebene Wirkung dadurch optimiert werden, daß die Dauer der Schöpfdrehrichtung und die Dauer der Entleerungsdrehrichtung innerhalb einer Reversierphase sich wie etwa 1:3 verhalten.

Eine besondere Ausbildung der erfindungsgemäßen Trommelwaschmaschine ergibt sich durch die Gestaltung der Mitnehmer in Form eines Satteldaches, wobei die Dachfläche auf der Seite der Schöpfvorrichtung ungelocht, die andere Dachfläche dagegen im Bereich der Dachspitze gelocht und im Bereich des Dachfußes ungelocht ist. Eine solche Form der Mitnehmer hat sich als besonders gut geeignet für die Schöpfwirkung und die Beregnung der Wäsche erwiesen.

Anhand der in der Zeichnung dargestellten Ausführungsbeispiele ist das erfindungsgemäße Verfahren und eine danach arbeitende Trommelwaschmaschine nachstehend erläutert. Es zeigen:

Fig. 1
eine schematische, aufgebrochene Darstellung des Laugenbehälters und der Trommel einer Trommelwaschmaschine,
Fig. 2 bis Fig. 4
je eine Draufsicht und eine Schnittdarstellung für drei verschiedene Ausführungsformen von Mitnehmern der Wäschetrommel,
Fig. 5 und Fig. 6
zwei Betriebsphasen einer Wäschetrommel mit einer bevorzugten Art von Wäschemitnehmern,
Fig. 7
ein Diagramm des Laugenniveaus im Laugenbehälter über einem Zeitabschnitt während eines Klarwäscheabschnitts und
Fig. 8 bis Fig. 10
je ein Ablaufdiagramm für drei verschiedene Trommel-Drehrhythmen im Intensiv-, Normal- und Feingang.

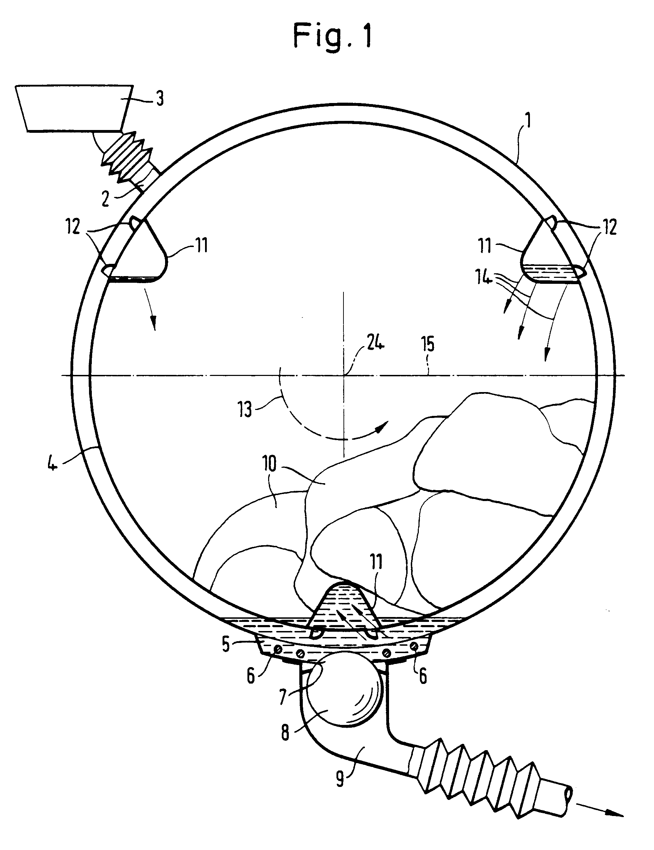

Der Laugenbehälter 1 in Fig. 1 enthält in seinem oberen Bereich eine Einfüllöffnung 2 für aus einer Waschmittel-Einspülvorrichtung 3 zusammen mit Zulaufwasser eingeführtes Waschmittel.

Der Boden des in möglichst geringem Abstand zur Trommel 4 gehaltenen Laugenbehälters 1 hat eine Vertiefung 5, in der die zum Erwärmen der Lauge nötigen Heizkörper 6 angeordnet sind. An der tiefsten Stelle der Vertiefung 5 ist eine Auslauföffnung 7 angebracht, die durch einen Verschlußkörper 8 verschlossen gehalten wird, solange eine nicht dargestellte Laugenpumpe an der Abflußleitung 9 nicht saugt. Dieser Verschlußkörper 8 hat die Aufgabe, den Raum unterhalb der Abflußöffnung 7 solange verschlossen zu halten, wie sich zum Waschen der Wäsche benötigtes Waschmittel innerhalb des Laugenbehälters befindet.

Im zunehmenden Bestreben, zum Waschen immer weniger Wasser und Waschmittel einzusetzen, hat sich in der jüngsten Zeit die zum Waschen erforderliche Wassermenge so sehr verringert, daß die Wäschetrommel 4 nur noch geringfügig in die am Boden des Laugenbehälters 1 befindliche Lauge eintaucht. Hierdurch entsteht jedoch eine neuartige, durch die Trommelwaschmaschine der DE-OS 37 12 118 teilweise bereits behobene Schwierigkeit: Die am Boden der Wäschetrommel 1 lagernde Wäsche 10 kommt bei Trommelwaschmaschinen ohne Schöpfeinrichtungen in nicht mehr ausreichendem Maße in Berührung mit der Lauge, so daß die Wäsche nur noch äußerst langsam und sehr unvollständig benetzt wird. Eine ausreichende Waschwirkung kann bei derartigen Trommelwaschmaschinen mit extrem niedrigen Wasserständen daher auch dann nicht erreicht werden, wenn während der Benetzungsphase die Trommeldrehzahl auf einen Wert (z.B. 30 min$^{-1}$) unterhalb der Waschdrehzahl (z.B. 50 min$^{-1}$) reduziert wird.

Die aus der DE-OS 37 12 118 bekannte Trommelwaschmaschine hat daher am Umfang im Bereich der Mitnehmer 11 Schöpfvorrichtungen 12, die beim Drehen der Trommel, z.B. in Richtung des Pfeiles 13, aus dem in der Vertiefung 5 stehenden Laugenvorrat den jeweiligen Zwischenspeicherraum, hier den Mitnehmer 11, füllen können. Während der Aufwärtsbewegung des Mitnehmers wird diese geschöpfte Wassermenge zunächst zwischengespeichert und über Auslaßöffnungen in dem Zwischenspeicherraum erst in den Trommelinnenraum abgegeben, wenn der Zwischenspeicherraum eine gewisse Höhe im Bereich unter oder über der waagerechten Trommelachse 15, vorzugsweise aber über der in der Trommel 4 liegenden, vollständig benetzten Wäsche 10, erreicht hat. Durch die Pfeile 14 ist angedeutet, in welcher Weise das derartig hochgehobene Wasser über die Wäsche 10 regnet.

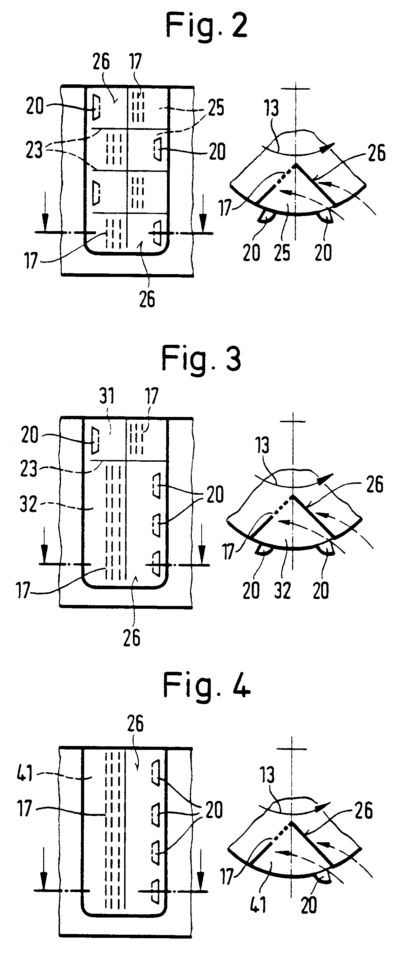

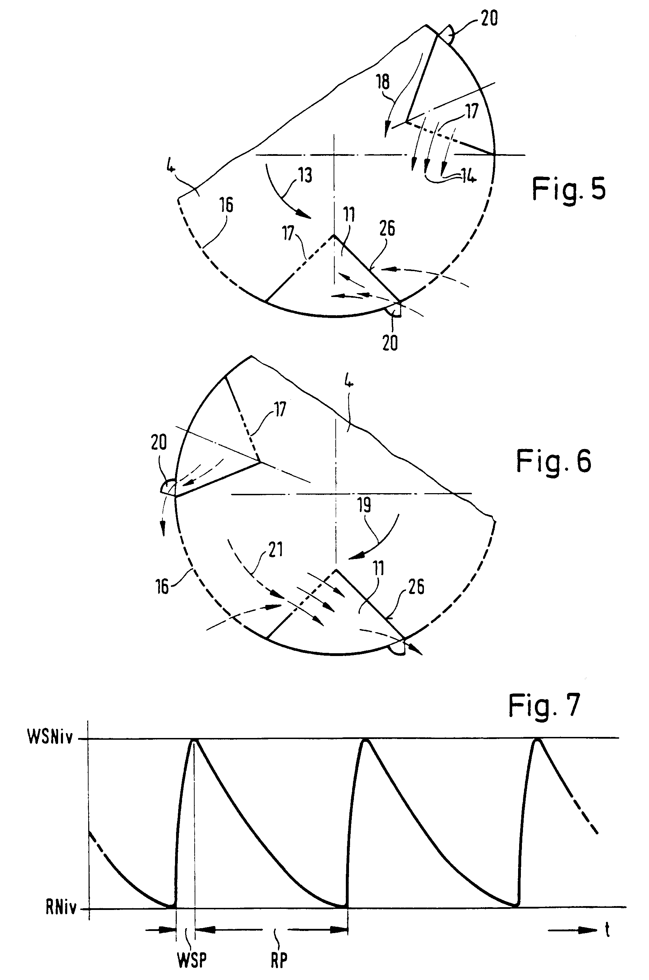

Die Mitnehmer 11 können gemäß Fig. 2 durch Schottwände 23 in mehrere gleich große Kammern 25 unterteilt sein. Hierin sind sie sich den Mitnehmern in Fig. 6 der DE-OS 37 12 118 ähnlich. Die entlang dem Mitnehmer verteilten Kammern 25 haben wiederum ähnlich dem bekannten Mitnehmer abwechselnd in die eine und in die andere Drehrichtung weisende Schöpflöffel 20 als Schöpfvorrichtungen für die Mitnehmer. Im Gegensatz zum bekannten Mitnehmer hat der dachförmige Teil des Mitnehmers jedoch lediglich auf der dem Schöpflöffel 20 gegenüberliegenden Dachfläche Flutlöcher 17, durch die emporgehobene Lauge abgeregnet werden kann. Die Flutlöcher sind in dieser jeweils einen Dachfläche aber nur in der Nähe der Dachspitze angeordnet, damit sich im Raumwinkel am Fuße dieser Dachfläche zum Emporheben genügend Lauge ansammeln kann. In der durch den Pfeil 13 angedeuteten Schöpfdrehrichtung schöpft der rechte Schöpflöffel 20 Lauge in die Kammer 25.

Gleichzeitig dringt auch Lauge durch die bekanntermaßen im Trommelmantel zwischen den Mitnehmern angeordnete Lochung gegen die Außenseite der ungelochten Dachfläche (siehe gestrichelte Pfeile) und wird vom Mitnehmer soweit angehoben, bis sie über die Dachspitze von oben auf die Wäsche herabfließt. Dies geschieht bereits, bevor die Kammer 25 ihren Inhalt durch die Flutlöcher 17 abregnet. Daher wird die Wäsche bereits während einer 1/3-Trommeldrehung durch einen einzigen Mitnehmer an unterschiedlichen Teilen benetzt.

Bei einer Dauer des Benetzungsabschnitts von 3 min einer Einschaltdauer von 30 % und einer Trommeldrehzahl von 30 min$^{-1}$ wird die Wäsche 81 mal auf diese Weise benetzt. Hieraus erkennt man bereits die hohe Effektivität der Laugenzuführung zur Wäsche.

Der Mitnehmer gemäß Fig. 4 enthält nur zwei Kammern 31 und 32, die ungleich groß sind. Hierdurch ergibt sich eine Vorzugsschöpfrichtung, deren Vorteile weiter unten beschrieben werden.

Fig. 4 zeigt einen Mitnehmer mit nur einer einzigen Kammer 41, deren Schöpflöffel nur in eine Richtung gerichtet sind. Entsprechend kann diese Kammer nur in einer Drehrichtung schöpfen.

Die der jeweiligen Drehrichtung abgewandten Schöpflöffel 20 und zugeordneten Kammern aller Ausführungsbeispiele von Mitnehmern pumpen Lauge wieder aus der Wäschetrommel ab und fördern sie in den Zwischenraum zwischen Trommel und Laugenbehälter. Dadurch wird der Austausch zwischen der in der Wäsche befindlichen Lauge und der freien Lauge gefördert. Hieraus resultiert eine bessere Waschwirkung, weil von der Wäsche abgelöster Schmutz schneller aus der Wäsche herausgespült werden kann.

Die in Fig. 5 dargestellte Wäschetrommel dreht sich gemäß Pfeil 13 in Schöpfdrehrichtung. Dabei schöpfen einerseits die Schöpflöffel 20 Lauge aus dem Laugenbehälter in den Mitnehmer 11 und andererseits die Flutlöcher 16 ebenfalls aus dem Zwischenraum zwischen der Trommel 4 und dem Laugenbehälter Lauge auf die ungelochten Dachflächen 26 der Mitnehmer 11. An dem weiter oben befindlichen Mitnehmer ist zu erkennen, daß gemäß dem Pfeil 18 geschöpfte Lauge von der Außenseite der Dachfläche 26 auf die unten liegende (in Fig. 5 und 6 nicht dargestellt) Wäsche fließt und kurze Zeit darauf ebenfalls geschöpfte Lauge durch die Flutlöcher 17 gemäß der Pfeile 14 aus dem Mitnehmer 11 auf die Wäsche regnet. Hieraus ist daher erkennbar, daß der Benetzungseffekt größer ist als beim Gegenstand der DE-OS 37 12 118.

Die in Fig. 6 dargestellte Wäschetrommel dreht sich gemäß Pfeil 19 in Entleerungsdrehrichtung. Hierbei saugt der nach hinten offene, durch die Lauge am Boden des Laugenbehälters streichende Schöpflöffel 20 aus dem Innenraum des Mitnehmers 11 Lauge an, die durch die Flutlöcher 17 aus dem Innenraum der Trommel nachströmen muß. Diese Lauge stammt im wesentlichen gemäß Pfeil 21 aus der feuchten Wäsche und wird bei Trommeldrehzahlen bis zu etwa 60 min$^{-1}$ auch durch die Flutlöcher 16 im Trommelmantel aus dem Zwischenraum zwischen Trommel und Laugenbehälter gesaugt. Bei darüber liegenden Drehzahlen überwiegt jedoch die Zentrifugalkraft, so daß Feuchtigkeit nur aus dem Trommelinneren angesaugt wird.

Während des Benetzungsabschnitts wird gemäß dem erfindungsgemäßen Verfahren die Wäschetrommel mit höchstens 30 % Einschaltdauer intervallartig angetrieben. Wäschetrommeln, deren Mitnehmer gemäß Fig. 2 und 3 gestaltet sind, können reversierend angetrieben werden.

Bei Mitnehmern gemäß Fig. 2, bei denen die Volumina der jeder Drehrichtung zugeordneten Kammern gleich groß sind, kann der Reversierrhythmus ebenfalls gleichmäßig verteilt sein, z.B. 3 s Linkslauf, 9 s Pause, 3 s Rechtslauf und 9 s Pause. Dabei ergeben sich insgesamt 24 s für ein Intervall und 25 % Einschaltdauer.

Bei Mitnehmern gemäß Fig. 3, bei denen die Volumina der jeder Drehrichtung zugeordneten Kammern 31 und 32 ungleich groß sind, hier z.B. 3x V31 = V32, kann der Reversierrhythmus umgekehrt proportional verteilt sein, damit bei jedem Schöpfvorgang der Wäsche die gleiche Beregnungsmenge zugeführt wird, z.B. 3 s Linkslauf, 14 s Pause, 9 s Rechtslauf, 14 s Pause. Dabei ergeben sich insgesamt 40 s für ein Intervall und 30 % Einschaltdauer.

Wäschetrommeln, deren Mitnehmer nur eine Kammer 41 mit in einer Drehrichtung wirkendem Schöpflöffel 20 gemäß Fig. 4 aufweisen, werden im Benetzungsabschnitt zweckmäßigerweise auch nur in dieser einen Drehrichtung betrieben. Beispielsweise kann die Wäschetrommel in jedem Intervall 5 s lang laufen und 15 s lang stehen, das ist eine Einschaltdauer von 25 %.

Während der Stillstandzeiten der Wäschetrommel sickert die abgeregnete Lauge langsam in Schwerkraftrichtung durch die Wäsche, ehe die Wäsche in der anschließenden Laufphase wieder umgeschichtet wird.

Während des Klarwäscheabschnitts wird die Wäschetrommel anders als im Benetzungsabschnitt angetrieben. Da es hier nicht mehr auf eine optimale Benetzung sondern auf eine optimale mechanische Behandlung der Wäsche ankommt, wird die Wäschetrommel während des Klarwäscheabschnitts - außer zur Behandlung von empfindlicher Wäsche wie Wolle - mit einer üblichen Trommeldrehzahl angetrieben, z.B. 55 min$^{-1}$.

Außerdem kann der Klarwäscheabschnitt gemäß Fig. 7 in Wasch-Schleuderphasen WSP und Reversierphasen RP unterteilt sein. In den Wasch-Schleuderphasen wird die Wäschetrommel in Entleerungsrichtung aus dem Stillstand beschleunigt, bis beispielsweise eine Drehzahl von 300 min$^{-1}$ erreicht ist. Dieser Vorgang dauert etwa 10 s. Der Schleuderanlauf kann auch zeitlich begrenzt sein; dann wird die erreichte Enddrehzahl durch die Beladung der Wäschetrommel bestimmt. Sie wird möglicherweise zwischen 150 min$^{-1}$ und 350 min$^{-1}$ variieren.

An eine Wasch-Schleuderphase WSP schließt sich im Klarwäscheabschnitt eine Reversierphase RP an, während der die Trommel im Reversierbetrieb angetrieben wird. Hierzu kann je nach den mechanischen Behandlungsanforderungen und je nach der Wäscheempfindlichkeit ein Normal-, Intensiv- oder Feingang angewendet werden. Diese Reversierphase dauert beispielsweise 80 s.

Die Aufteilung des Klarwäscheabschnitts in Wasch-Schleuderphasen WSP und Reversierphasen RP hat folgenden vorteilhaften Effekt:
Während der Reversierphasen wird bekanntermaßen soviel Lauge, wie von den Schöpflöffeln 20 erfaßt werden kann, in den Trommelinnenraum, nämlich in die Wäsche 10 transportiert. Da aus der Wäsche immer wieder etwas überschüssige Lauge zurücktropft, stellt sich ein Gleichgewicht zwischen geschöpfter und zurückfließender Lauge ein. Aufgrund dieses ständigen Laugenflusses durch die Wäsche wird abgelöster Schmutz effektiver aus der Wäsche transportiert. Entsprechend wird ein bestimmtes Niveau RNiv erreicht bzw. eingehalten.

Während der Wasch-Schleuderphasen wird zusätzlich schmutzige Lauge weitgehend abgeschleudert und durch den zu Fig. 6 beschriebenen Effekt aus der Wäschetrommel in den Zwischenraum zum Laugenbehälter befördert. Hierdurch wird das Schmutz-Ablöseverhalten noch weiter verbessert und außerdem das Niveau im Laugenbehälter kurzzeitig bis auf den Pegel WSNiv erhöht.

Es hat sich außerdem als vorteilhaft erwiesen, während der Reversierphase die Verringerung des Laugenstandes im Laugenbehälter verzögert einzustellen. Bei Schöpf-Drehrichtung wären nämlich an sich nur wenige Schöpfvorgänge während beispielsweise zwei Trommelumdrehungen notwendig, um das Niveau RNiv wieder zu erreichen. Einen besseren Reinigungseffekt ergibt aber ein Reversierbetrieb, in dem das Verhältnis von geschöpfter und entleerter Laugenmenge nur wenig zugunsten der geschöpften Menge ausgelegt ist. Der verbesserte Effekt beruht z.T. darauf, daß hierbei eine Schaumbildung weitgehend vermieden wird.

Bestimmend für dieses Verhältnis von geschöpfter und entleerter Laugenmenge ist einerseits das Verhältnis der Volumina der jeweiligen Kammern in den Mitnehmern und andererseits die Verteilung des Trommelbetriebs auf die jeweiligen Drehrichtungen.

Eine Mitnehmergestaltung gemäß Fig. 2 fällt für diese Anwendung aus; denn dieser Mitnehmer würde in beiden Drehrichtungen gleichviel Laugenmenge schöpfen. Daher betrachten wir nur die Mitnehmer gemäß Fig. 3 und 4.

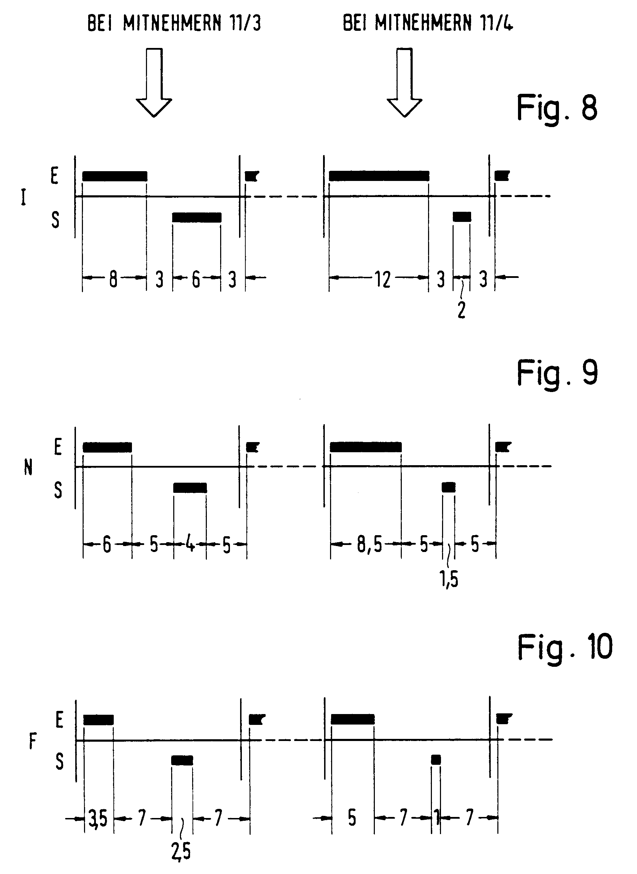

Für drei unterschiedlich intensive Trommelbetriebsmöglichkeiten "Intensivgang" I, "Normalgang" N und "Feingang" F, bei denen die Trommel-Betriebsdauer im Verhältnis zur Stillstandsdauer von 70 % Einschaltdauer beim Intensivgang, 50 % Einschaltdauer beim Normalgang und 30 % Einschaltdauer beim Feingang variiert werden kann, sind in den Figuren 8 bis 10 drei Diagramme gezeichnet. Im jeweils linken Intervall sind die Trommel-Betriebsweisen für Mitnehmer gemäß Fig. 3 und im jeweils rechten Intervall diejenigen für Mitnehmer gemäß Fig. 4 dargestellt.

E bedeutet den Trommelbetrieb in Entleerungsdrehrichtung und S den Trommelbetrieb in Schöpftdrehrichtung (in Fig. 3 jeweils auf die größere Kammer 32 bezogen).

In Fig. 8 ist der Intensivgang für Mitnehmer nach Fig. 3 in 8 s Entleerungsdrehrichtung, 3 s Stillstand, 6 s Schöpfdrehrichtung und wieder 3 s Stillstand aufgeteilt, für Mitnehmer nach Fig. 4 in 12 s Entleerungsdrehrichtung, 3 s Stillstand, 2 s Schöpfdrehrichtung und 3 s Stillstand.

Entprechend weisen der Normalgang gemäß Fig. 9 für Mitnehmer nach Fig. 3 6 s Entleerungsdrehrichtung, 5 s Stillstand, 4 s Schöpfdrehrichtung und 5 s Stillstand bzw. für Mitnehmer gemäß Fig. 4 8,5 s Entleerungsdrehrichtung, 5 s Stillstand, 1,5 s Schöpfdrehrichtung und 5 s Stillstand sowie der Feingang gemäß Fig. 10 für Mitnehmer nach Fig. 3 3,5 s Entleerungsdrehrichtung, 7 s Stillstand, 2,5 s Schöpfdrehrichtung und 7 s Stillstand bzw. für Mitnehmer gemäß Fig. 4 5 s Entleerungsdrehrichtung, 7 s Stillstand, 1 s Schöpfdrehrichtung und 7 s Stillstand auf. Die symmetrische Aufteilung der Stillstandszeiten nach jedem Lauf kann ebenfalls noch aufgegeben werden. Beispielsweise kann es von Vorteil sein, wenn die Stillstandszeiten nach jedem Lauf in Schöpfdrehrichtung länger sind als nach der Entleerungsdrehrichtung, damit die Lauge länger Gelegenheit hat, durch die Wäsche zu sikkern.

Der Spülabschnitt wird ebenfalls mit einem reversierten Trommelbetrieb abgehalten, der so eingestellt ist, daß ähnlich der Fig. 7 das Niveau im Laugenbehälter antizyklisch zur in der Wäsche befindlichen Laugenmenge steigt und fällt. Beispielsweise kann der Anteil des Trommelantriebs in Schöpfdrehrichtung größer sein als in Entleerungsdrehrichtung. Je nach Verwendung der vorgeschlagenen Mitnehmer wird man die Anteile der jeweiligen Trommel-Drehrichtungen bemessen. Hierdurch werden die Spülwasserströmung durch die Wäsche intensiviert und die Laugenreste besser ausgespült. Im übrigen können die Erkenntnisse aus dem zuvor beschriebenen Klarwäscheabschnitt berücksichtigt werden.

Der Schleuderabschnitt einer solchen Trommelwaschmaschine verläuft in bekannter Weise, wobei die Trommel nur in Entleerungs-Drehrichtung antreibbar sein soll. In der anderen Drehrichtung würden abgeschleuderte Laugenreste wieder vom Schöpflöffel 20 aufgefangen und in den Innenraum der Trommel befördert werden.

## Patentansprüche

1. Verfahren zum Betreiben einer Trommelwaschmaschine mit einer horizontal drehbar gelagerten Wäschetrommel mit gelochtem Trommelmantel und mit darin angeordneten Mitnehmern, die zu ihrem Innenraum hin offene Schöpfvorrichtungen aufweisen, und mit einem automatisch gesteuerten Waschprogramm, das einen Benetzungsabschnitt mit einer Trommeldrehzahl von höchstens etwa 30 min$^{-1}$, einen Klarwäscheabschnitt von höchstens etwa 60 min$^{-1}$, einen Spülabschnitt und einen Schleuderabschnitt aufweist, **dadurch gekennzeichnet,** daß die Trommel während des Benetzungsabschnitts mit höchstens 30 %, vorzugsweise 25 %, Einschaltdauer intervallartig und nur in Schöpfdrehrichtung (S, 13), während des Klarwäscheabschnitts und während des Spülabschnitts abwechselnd in Schöpfdrehrichtung (S, 13) und in Entleerungsdrehrichtung (E, 19) sowie während des Schleuderabschnitts nur in Entleerungsdrehrichtung (E, 19) angetrieben wird.

2. Verfahren nach Anspruch 1, dadurch gekennzeichnet, daß die Einschaltdauer während eines Intervalls des Trommelantriebs im Benetzungsabschnitt etwa 4 s und die Stillstanddauer etwa 12 s beträgt.

3. Verfahren nach Anspruch 1 oder 2, dadurch gekennzeichnet, daß der Trommelantrieb während des Benetzungsabschnitts erstmals nach Erreichen eines Laugenniveaus (RNiv) eingeschaltet wird, bei dem die Schöpfvorrichtungen (20) gerade in die Lauge eintauchen.

4. Verfahren nach einem der Ansprüche 1 bis 3, dadurch gekennzeichnet, daß der Benetzungsabschnitt maximal 3 min dauert.

5. Verfahren nach Anspruch 1, dadurch gekennzeichnet, daß der Klarwäscheabschnitt wenigstens zwei Zyklen aufweist, die eine Wasch-Schleuderphase (WSP), bei der die Wäschetrommel (4) in Entleerungsrichtung (E, 19) mit einer Drehzahl bis zu 300 min$^{-1}$ gedreht wird, und eine Reversierphase (RP) umfaßt, bei der die Wäschetrommel alternierend mit einer Waschdrehzahl von ungefähr 55 min$^{-1}$ gedreht wird, wobei die Schöpfdrehrichtung (S, 13) weniger lange eingehalten wird als die Entleerungsdrehrichtung (E, 19).

6. Trommelwaschmaschine zur Durchführung des Verfahrens nach einem der Ansprüche 1 bis 5, mit einer horizontal drehbar gelagerten Wäschetrommel (4) mit gelochtem Trommelmantel und mit darin angeordneten Mitnehmern (11), die zu ihrem Innenraum hin offene Schöpfvorrichtungen (12) aufweisen, dadurch gekennzeichnet, daß die Schöpfvorrichtungen (20) aller Mitnehmer (11) in eine gemeinsame Schöpfdrehrichtung (13) weisen.

7. Trommelwaschmaschine zur Durchführung des Verfahrens nach einem der Ansprüche 1 bis 5, mit einer horizontal drehbar gelagerten Wäschetrommel (4) mit gelochtem Trommelmantel und mit darin angeordneten Mitnehmern (11), die zu ihrem Innenraum hin offene Schöpfvorrichtungen (12) aufweisen, dadurch gekennzeichnet, daß jeder Mitnehmer (11) mindestens zwei gegeneinander abgedichtete Kammern (31, 32) unterschiedlicher Volumina enthält und ihre zugeordneten Schöpfvorrichtungen (20) in unterschiedliche Drehrichtungen weisen.

8. Trommelwaschmaschine nach Anspruch 6 oder 7 zur Durchführung des Verfahrens nach Anspruch 5, dadurch gekennzeichnet, daß die Wasch-Schleuderphase (WSP) eine Dauer von etwa 10 s und die Reversierphase (RP) eine Dauer von etwa 80 s hat.

9. Trommelwaschmaschine nach Anspruch 8, dadurch gekennzeichnet, daß während der Reversierphase die Dauer der Schöpfdrehrichtung (S, 13) und die Dauer der Entleerungsdrehrichtung (E, 19) sich wie etwa 1:3 verhalten.

10. Trommelwaschmaschine nach einem der Ansprüche 6 bis 9, dadurch gekennzeichnet, daß die Mitnehmer (11) satteldachförmig gestaltet sind und die Dachfläche (26) auf der Seite der Schöpfvorrichtung (20) ungelocht, die andere Dachfläche dagegen im Bereich der Dachspitze gelocht (Flutlöcher 17) und im Bereich des Dachfußes ungelocht ist.

**Claims**

1. Method of operating a drum washing machine comprising a horizontally rotatably mounted laundry drum with apertured drum wall and with entrainers, which are arranged in the drum and have scoop devices open towards the interior space thereof, and comprising an automatically controlled washing program, which has a wetting section at a drum rotational speed of at most about 30 $min^{-1}$, a clear washing section of at most about 60 $min^{-1}$, a rinsing section and a spinning section, characterised thereby that the drum is driven during the wetting section at at most 30%, preferably 25%, of the switched-on duration in intermittent manner and only in scooping rotational direction (S, 13), during the clear washing section and during the rinsing section alternately in scooping rotational direction (S, 13) and in emptying rotational direction (E, 19), and during the spinning section only in emptying direction (E, 19).

2. Method according to claim 1, characterised thereby that the switched-on duration during an interval of the drum drive amounts to about 4 seconds in the wetting section and the standstill duration mounts to about 12 seconds.

3. Method according to claim 1 or 2, characterised thereby that the drum drive during the wetting section is switched on for the first time after attainment of a washing solution level (RNiv) at which the scooping devices (20) just dip into the washing solution.

4. Method according to one of claims 1 to 3, characterised thereby that the wetting section lasts for 3 minutes at the maximum.

5. Method according to claim 1, characterised thereby that the clear washing section has at least two cycles, which comprise a washing-spinnng phase (WSP), in which the laundry drum (4) is rotated in the emptying direction (E, 19) at a rotational speed of up to 300 min -1, and a reversing phase, in which the laundry drum is alternatingly rotated at a washing rotational speed of about 55 $min^{-1}$, wherein the scooping rotational direction (S, 13) is kept to smaller length than the emptying rotational direction (E, 19).

6. Drum washing machine for the carrying out of the method according to one of claims 1 to 5, comprising a horizontally rotatably mounted laundry drum with apertured drum wall and with entrainers (11) which are arranged in the drum and have scoop devices open towards the interior space thereof, characterised thereby that the scoop devices (20) of all entrainers (11) face in a common scooping rotational direction (13).

7. Drum washing machine for the carrying out of the method according to one of claims 1 to 5, comprising a horizontally rotatable mounted laundry drum with apertured drum wall and with entrainers (11) which are arranged in the drum and have scoop devices open towards the interior space thereof, characterised thereby that each entrainer (11) has two chambers (31, 32) of different volume sealed off from one another and their associated scooping devices (20) face in different directions.

8. Drum washing machine according to claim 6 or 7 for carrying out the method according to claim 5, characterised thereby that the washing-spinning phase (WSP) has a duration of about 10 seconds and the reversing phase (RP) a duration of about 80 seconds.

9. Drum washing machine according to claim 8, characterised thereby that during the reversing phase the duration of the scooping rotational direction (S, 13) and the duration of the emptying rotational direction (E, 19) are in ratio of about 1:3.

10. Drum washing machine according to one of claims 6 to 9, characterised thereby that the entrainers (11) are formed to be saddle-roof shaped and the roof surface (26) on the side of the scooping device (20) is unapertured, whereagainst the other roof surface is apertured in the region of the roof peak (flood openings 17) and unapertured in the region of the roof base.

**Revendications**

1. Procédé pour faire fonctionner une machine à laver à tambour comportant un tambour de lavage, monté de façon à pouvoir tourner autour d'un axe horizontal, avec une enveloppe de tambour qui est trouée et avec des entraîneurs agencés à l'intérieur et qui comportent des dispositifs de puisement qui sont ouverts vers leur espace intérieur, et comportant un programme de lavage commandé automatiquement qui comprend un sous-programme de mouillage, avec une vitesse de rotation du tambour valant au maximum 30 t/min environ, un sous-programme de lavage d'au maximum 60 t/min environ, un sous-programme de rinçage et un sous-programme d'essorage, caractérisé en ce que le tambour est entraîné, pour le sous-programme de mouillage, pendant une durée de fonctionnement valant au maximum 30 %, de préférence 25 %, par intervalles et seulement dans le sens de rotation de puisement (S, 13), pour le sous-programme de lavage et pour le sous-programme de rinçage, alternativement dans le sens de rotation de puisement (S, 13) et dans le sens de rotation d'évacuation (E, 19), et pour le sous-programme d'essorage seulement dans le sens de rotation d'évacuation (E, 19).

2. Procédé selon la revendication 1, caractérisé en ce que la durée de fonctionnement pendant un intervalle d'entraînement du tambour pour le sous-programme de mouillage vaut environ 4 s, et la durée d'arrêt vaut environ 12 s.

3. Procédé selon la revendication 1 ou 2, caractérisé en ce que l'entraînement du tambour pendant le sous-programme de mouillage est mis en marche seulement après qu'un niveau de lessive (RNiv) a été atteint, niveau pour lequel les dispositifs de puisement (20) plongent juste dans la lessive.

4. Procédé selon l'une des revendications 1 à 3, caractérisé en ce que le sous-programme de mouillage dure au maximum 3 minutes.

5. Procédé selon la revendication 1, caractérisé en ce que le sous-programme de lavage comporte au moins deux cycles, une phase de lavage-essorage (WSP) pendant laquelle le tambour de lavage (4) tourne dans le sens d'évacuation (E, 19) avec une vitesse de rotation allant jusqu'à 300 t/min, et une phase réversible (RP) pendant laquelle le tambour de lavage tourne alternativement avec une vitesse de rotation de lavage d'environ 55 t/min, le sens de rotation de puisement (S, 13) étant gardé moins longtemps que le sens de rotation d'évacuation (E, 19).

6. Machine à laver à tambour pour la mise en oeuvre du procédé selon l'une des revendications 1 à 5, comportant un tambour de lavage (4), monté de façon à pouvoir tourner autour d'un axe horizontal, avec une enveloppe de tambour qui est trouée et avec des entraîneurs (11) agencés à l'intérieur et qui comportent des dispositifs de puisement (12) qui sont ouverts vers leur espace intérieur, caractérisée en ce que les dispositifs de puisement (20) de tous les entraîneurs (11) indiquent un même sens de rotation de puisement (13).

7. Machine à laver à tambour pour la mise en oeuvre du procédé selon l'une des revendications 1 à 5, comportant un tambour de lavage (4), monté de façon à pouvoir tourner autour d'un axe horizontal, avec une enveloppe de tambour qui est trouée et avec des entraîneurs (11) agencés à l'intérieur qui comportent des dispositifs de puisement (12) qui sont ouverts vers leur espace intérieur, caractérisée en ce que chaque entraîneur (11) contient au moins deux godets (31, 32) étanches entre eux et de différents volumes et que leurs dispositifs respectifs de puisement (20) indiquent des sens différents de rotation.

8. Machine à laver à tambour selon la revendication 6 ou 7 pour la mise en oeuvre du procédé selon la revendication 5, caractérisée en ce que la phase de lavage-essorage (WSP) a une durée d'environ 10 s et que la phase réversible (RP) a une durée d'environ 80 s.

9. Machine à laver à tambour selon la revendication 8, caractérisée en ce que pendant la phase réversible, la durée du sens de rotation de puisement (S, 13) et la durée du sens de rotation d'évacuation (E, 19) se trouvent dans une proportion d'environ 1 à 3.

10. Machine à laver à tambour selon l'une des revendications 6 à 9, caractérisée en ce que les entraîneurs (11) sont conçus en forme de toit à deux pans et que le pan du toit (26) du côté du dispositif de puisement (20) n'est pas troué, en ce que, par contre, l'autre pan du toit est troué dans la zone près du faîte du toit (trous d'écoulement 17) mais n'est pas troué dans la zone près de la saillie du toit.

# Fig. 1

EP 0 475 462 B1

# Fig. 2

# Fig. 3

# Fig. 4

Fig. 5

Fig. 6

Fig. 7

BEI MITNEHMERN 11/3     BEI MITNEHMERN 11/4

Fig. 8

Fig. 9

Fig. 10